# EUROPÄISCHE PATENTANMELDUNG

(11) **EP 1 930 716 A1**
(43) Veröffentlichungstag der Anmeldung: **11.06.2008**
(21) Anmeldenummer: 06025431.5
(22) Anmeldetag: 08.12.2006
(51) Int. Cl.: G01N 21/64

(54) **Verfahren und Vorrichtung zur Detektion eines Liganden in einem Fluid**

(71) Anmelder: Micronas GmbH, 79108 Freiburg i. Br. (DE)
(72) Erfinder: Lehmann, Mirko, Dr. rer. nat., 79117 Freiburg (DE)
(74) Vertreter: Huwer, Andreas

(57) **Zusammenfassung**

Bei einem Verfahren zur Detektion mindestens eines Liganden (2a, 2b, 2c), von dem vermutet wird, dass er in einem zu untersuchenden Fluid (1) enthalten ist, wird in das Fluid (1) wenigstens ein Marker (3a, 3b, 3c) eingebracht, der dazu geeignet ist, an den Liganden (2a, 2b, 2c) zu binden. Es wird mindestens ein Messwert für die Diffusionsgeschwindigkeit des Markers (3a, 3b, 3c) in dem Fluid (1) erfasst. Ferner wird ein Referenzwertbereich für die Diffusionsgeschwindigkeit bereitgestellt, die ein Komplex bestehend zumindest aus dem Liganden (2a, 2b, 2c) und dem daran gebundenen Marker (3a, 3b, 3c), in dem Fluid (1) aufweist. Der Messwert wird mit dem Referenzwertbereich verglichen und in Abhängigkeit von dem Ergebnis dieses Vergleichs wird auf die Anwesenheit des Liganden (2a, 2b, 2c) in dem Fluid (1) geschlossen.

## Beschreibung

Die Erfindung betrifft ein Verfahren zur Detektion mindestens eines Liganden, von dem vermutet wird, dass er in einem zu untersuchenden Fluid enthalten ist, wobei in das Fluid wenigstens ein Marker eingebracht wird, der dazu geeignet ist, an den Liganden spezifisch zu binden. Außerdem betrifft die Erfindung eine Vorrichtung zur Detektion mindestens eines mit einem Marker spezifisch markierbaren Liganden, von dem vermutet wird, dass er in einem zu untersuchenden Fluid enthalten ist.

Ein derartiges Verfahren ist aus T. Vo-Dinh et al., Analytical Chemistry, Band 71, Nr. 2 vom 15. Januar 1999 bekannt. Dabei wird zur Detektion eines in einem Fluid enthaltenen Liganden zunächst an arrayförmig angeordneten Teststellen jeweils ein für den Liganden bindungsspezifischer Rezeptor auf einer Nitro-Zellulosemembran immobilisiert. Der Rezeptor wird mittels einer Kapillarnadel auf die Nitro-Zellulosemembran aufgebracht, die mit Hilfe einer zweiachsigen Positioniervorrichtung unter der Kapillarnadel positioniert wird. Danach werden die Rezeptoren entweder durch Bestrahlung mit UV-Licht oder durch eine Wärmebehandlung mit der Nitro-Zellulosemembran kreuzvernetzt. Dann wird das zu untersuchende Fluid mit den Rezeptoren derart in Kontakt gebracht, dass in dem Fluid enthaltene Liganden an die Rezeptoren binden können. Die so erhaltenen Rezeptor-Liganden-Komplexe werden mit einem optischen Marker markiert. Danach werden eventuell noch vorhandene freie Marker von Oberfläche der Nitro-Zellulosemembran abgespült. In einem weiteren Verfahrensschritt wird die Nitro-Zellulosemembran mit den darauf befindlichen, optisch markierten Rezeptor-Liganden-Komplexen über einem CCD-Flächensensor positioniert und mit einer Anregungsstrahlung bestrahlt, die den Marker zur Abgabe einer Lumineszenzstrahlung anregt, deren Wellenlänge sich von derjenigen der Anregungsstrahlung unterscheidet. Die Lumineszenzstrahlung wird mit Hilfe des CCD-Flächensensors gemessen. Anhand der entsprechenden Messwerte wird die Konzentration des Liganden in dem Fluid bestimmt. Damit mit diesem Verfahren das Fluid in nur einem einzigen Versuch auf das Vorhandensein möglichst vieler unterschiedlicher Liganden untersucht werden kann, ist es vorteilhaft, auf einer vorgegebenen, etwa der Sensorfäche des CCD-Sensors entsprechenden Fläche möglichst viele Teststellen auf der Nitro-Zellulosemembran anzuordnen. Dabei besteht jedoch das Problem, dass die Teststellen auf der Nitro-Zellulosemembran nicht beliebig dicht nebeneinander angeordnet werden können, da bei einer zu dichten Anordnung der Teststellen die Gefahr besteht, dass die Rezeptoren beim Aufbringen auf die Teststellen mit Rezeptoren einer benachbarten Teststelle in Kontakt geraten und sich mit diesen vermischen.

Es besteht deshalb die Aufgabe ein Verfahren und eine Vorrichtung der eingangs genannten Art zu schaffen, mit denen es auf einfache Weise möglich ist, auch eine größere Anzahl unterschiedlicher Liganden in dem Fluid zu detektieren.

Diese Aufgabe wird dadurch gelöst, dass mindestens ein Messwert für die Diffusionsgeschwindigkeit des Markers und/oder eines Komplexes, bestehend zumindest aus dem Liganden und dem daran gebundenen Marker, in dem Fluid erfasst wird, dass ein Referenzwertbereich für die Diffusionsgeschwindigkeit, die der Marker-Liganden-Komplex in dem Fluid aufweist, bereitgestellt wird, und dass der Messwert mit dem Referenzwertbereich verglichen und in Abhängigkeit von dem Ergebnis dieses Vergleichs auf die Anwesenheit des Liganden in dem Fluid geschlossen wird.

Der Erfindung liegt die Erkenntnis zu Grunde, dass die Diffusionsgeschwindigkeit von in einem Fluid enthaltenen Teilchen mit zunehmender Masse der Teilchen abnimmt. Daher ist die Diffusionsgeschwindigkeit eines an einen Liganden gebundenen Markers geringer als die eines ungebundenen Markers. Durch Messung der Diffusionsgeschwindigkeit des Markers und Vergleich des entsprechenden Messwerts mit dem Referenzwertbereich lässt sich also ermitteln, ob der Marker an einen Liganden gebunden ist und somit der Ligand in dem Fluid enthalten ist. Der Marker wird bevorzugt derart ausgewählt, dass er spezifisch an den Liganden, nicht jedoch an eventuelle andere in dem Fluid enthaltene Moleküle bindet. Dabei kann die Bindung des Markers an den Liganden auch indirekt über mindestens ein weiteres Teilchen, wie z.B. einen Nachweisantikörper erfolgen. Der Nachweisantikörper kann getrennt von dem Marker in das Fluid eingebracht werden und/oder in Form eines Nachweiseantikörper-Marker-Komplexes.

Bei einer bevorzugten Ausführungsform der Erfindung ist der Marker ein optischer Marker, wobei das Fluid mit einer Anregungsstrahlung bestrahlt wird, durch die der Marker zur Aussendung einer Lumineszenzstrahlung angeregt wird, wobei der Marker auf mindestens einen für die Lumineszenzstrahlung empfindlichen optischen Flächensensor abgebildet wird, und wobei die Diffusionsgeschwindigkeit des Markers ermittelt wird, indem die Bewegungsgeschwindigkeit, mit der das Abbild des Markers auf dem Flächensensor seine Lage verändert, gemessen wird. Die Diffusionsgeschwindigkeit kann also auf einfache Weise optisch gemessen werden. Dabei kann die Bewegungsgeschwindigkeit der auf den Flächensensor abgebildeten Marker mit an sich bekannten Methoden der Bildverarbeitung beispielsweise mit Hilfe eines Mikrocomputers bestimmt werden. Ggf. ist es sogar möglich, bei der Detektion des Liganden in dem Fluid die Verteilung der gemessenen Geschwindigkeitswerte der einzelnen Abbilder der Marker auf dem optischen Flächensensor zu berücksichtigen und mit einer Referenzverteilung zu vergleichen. In Abhängigkeit von dem Ergebnis dieses Vergleichs kann dann auf die Anwesenheit des Liganden geschlossen werden. Bevor der Messwert für die Diffusionsgeschwindigkeit des Marker-Liganden-Komplex gemessen wird, können eventuell in dem Fluid noch vorhandene freie Marker aus dem Detektionsbereich des Flächensensors entfernt werden. Dies kann beispielsweise dadurch erreicht werden, dass die freien Marker an Rezeptoren, die außerhalb des Detektionsbereichs des Flächensensors an einer Festkörperoberfläche, wie zum Beispiel einer Begrenzungswand einer das Fluid enthaltenden Messkammer, immobilisiert sind, gebunden werden. Dabei kann die Bindung der freien Marker an die immobilisierten Rezeptoren durch Reduzieren der Temperatur gefördert und/oder durch Erhöhen der Temperatur erschwert bzw. verhindert werden.

Die vorstehend genannte Aufgabe kann bei einem Verfahren, bei dem der Marker ein optischer Markes ist, auch dadurch gelöst werden, dass die Marker derart gewählt wird, dass das Spektrum der von ihm ausgesandten Lumineszenzstrahlung von der Bindung des Markers an den Liganden abhängig ist, dass für mindestens eine Wellenlänge die von dem Marker ausgesandte Lumineszenzstrahlung gemessen und mit einem vorbestimmten Wertebereich verglichen wird, und dass in Abhängigkeit von dem Ergebnis dieses Vergleichs auf die Anwesenheit des Liganden in dem Fluid geschlossen wird.

Ein derartiger, nach dem Prinzip des Fluoreszenz-Resonanz-Energie-Transfers arbeitender Marker ist aus einem Aufsatz des Herrn John Bracht "Fluorescense Resonance Energy Transfer, ISCID Encyclopedia of Science and Philosophy 2006, International Society for Complexity, Information, and Design bekannt. Der Aufsatz ist im Internet unter der Adresse <http://www.iscid.org/encyclopedia/Fluorescense_Resonance_Energy_Transfer> abrufbar. Der Marker weist zwei unterschiedliche Fluorophore auf, die bei ANregung bei unterschiedlichen Wellenlängen optische Strahlung emittieren. Der eine der beiden Fluorophore sendet bei Anregung eine optische Strahlung aus, welche den anderen Fluorophor seinerseits zur Aussendung von optischer Strahlung anregt. Der Fluoreszenz-Resonanz-Energie-Transfer ist vom Abstand der beiden Fluorophore und dieser wiederum davon abhängig, ob der Maker an den Ligand gebunden ist oder nicht. Durch Messung der Wellenlänge der von dem Marker ausgesandten optischen Strahlung und Vergleich dieser Wellenlänge mit dem vorbestimmten Wertebereich lässt sich also ermitteln, ob der Marker an einen Liganden gebunden ist und somit der Ligand in dem Fluid enthalten ist.

Der Erfindung liegt die Erkenntnis zu Grunde, dass die Diffusionsgeschwindigkeit von in einem Fluid enthaltenen Teilchen mit zunehmender Masse der Teilchen abnimmt. Daher ist die Diffusionsgeschwindigkeit eines an einen Liganden gebundenen Markers geringer als die eines ungebundenen Markers. Durch Messung der Diffusionsgeschwindigkeit des Markers und Vergleich des entsprechenden Messwerts mit dem Referenzwertbereich lässt sich also ermitteln, ob der Marker an einen Liganden gebunden ist und somit der Ligand in dem Fluid enthalten ist. Der Marker wird bevorzugt derart ausgewählt, dass er spezifisch an den Liganden, nicht jedoch an eventuelle andere in dem Fluid enthaltene Moleküle bindet. Dabei kann die Bindung des Markers an den Liganden auch indirekt über mindestens ein weiteres Teilchen, wie z.B. einen Nachweisantikörper erfolgen. Der Nachweisantikörper kann getrennt von dem Marker in das Fluid eingebracht werden und/oder in Form eines Nachweiseantikörper-Marker-Komplexes.

Bei einer vorteilhaften Ausgestaltung der Erfindung wird der optische Marker vorzugsweise mit Hilfe von Abbildungsoptiken auf mindestens zwei und bevorzugt mindestens drei mit ihren Messebenen vorzugsweise quer zueinander verlaufenden, für die Lumineszenzstrahlung empfindlichen optischen Flächensensoren abgebildet, wobei die Bewegungsgeschwindigkeiten, mit denen die Abbildungen des Markers auf dem Flächensensor ihre Lage verändern, ermittelt werden, und wobei die Diffusionsgeschwindigkeit des Markers aus den Bewegungsgeschwindigkeiten und Kenngrößen für die relative Lage der Flächensensoren und vorzugsweise der Abbildungsoptiken bestimmt wird. Dabei kann die Diffusionsgeschwindigkeit des Markers dreidimensional durch Triangulation bestimmt und der Ligand somit noch genauer in dem Fluid detektiert werden.

Vorteilhaft ist, wenn in das Fluid eine Vielzahl gleicher Marker eingebracht wird, wenn die Anzahl der Marker, deren Diffusionsgeschwindigkeit mit dem Referenzwertbereich übereinstimmt, ermittelt wird, und wenn aus der Anzahl die Konzentration des Markers in dem Fluid bestimmt wird. Der Ligand kann dann mit dem Verfahren sowohl qualitativ als auch quantitativ bestimmt werden.

Bei einer zweckmäßigen Ausgestaltung der Erfindung wird das Fluid mit einem flächigen, mit seiner Abstrahlebene vorzugsweise parallel zu der Ebene des Flächensensors angeordneten Strahlungsbündel der Anregungsstrahlung bestrahlt. Dadurch ist es möglich, nur eine bestimmte, mit dem Strahlungsbündel beleuchtete Schicht des Fluids auf das Vorhandensein des Liganden zu untersuchen.

Vorteilhaft ist, wenn das Strahlungsbündel zum Abbilden von in unterschiedlichen Breichen des Fluids angeordneten Liganden auf den Flächensensor quer zu dessen Erstreckungsebene relativ zu diesem verschoben und/oder verkippt wird. Die Konzentration des Liganden kann dann ortsaufgelöst in dem Fluid gemessen werden.

Bei einer bevorzugten Ausgestaltung der Erfindung werden in das Fluid mindestens zwei Arten von Markern eingebracht, die für unterschiedliche Liganden bindungsspezifisch sind und bei Bestrahlung mit der Anregungsstrahlung Lumineszenzstrahlung mit unterschiedlicher Wellenlänge aussenden, wobei die Diffusionsgeschwindigkeiten jeweils für die einzelnen Markerarten ermittelt werden, indem für jede der Wellenlängen jeweils die Bewegungsgeschwindigkeiten, mit denen die Abbilder der Marker der betreffenden Markerart auf dem Flächensensor ihre Lage verändern, gemessen werden, und wobei die so erhaltenen Messwerte für die Diffusionsgeschwindigkeiten jeweils mit einem der betreffenden Markerart zugeordneten Referenzwertbereich verglichen und jeweils in Abhängigkeit von dem Ergebnis des Vergleichs auf die Anwesenheit der für die betreffende Markerart bindungsspezifischen Liganden in dem Fluid geschlossen wird. Somit können mit nur einem Versuch mehrere Liganden gleichzeitig in dem Fluid detektiert und/oder deren Konzentration in dem Fluid gemessen werden.

Besonders vorteilhaft ist, wenn der mindestens eine Ligand dadurch bereitgestellt wird, dass aus einem in dem Fluid enthaltenen DNA- und/oder RNA-Molekül mindestens ein Teilstrang herausgetrennt und mittels einer Polymerase-Kettenreaktion vervielfältigt wird. Die Konzentration des mindestens einen vervielfältigten Teilstrangs kann dann on-line gemessen werden, um den Verlauf der Kettenreaktion zu überprüfen und diesen beispielsweise durch Erwärmen und/oder Abkühlen des Fluids ggf zu steuern. Das Heraustrennen des Teilstrangs kann mittels eines Primers erfolgen, der dem Fluid beigemischt wird. Dabei ist es sogar möglich, dass in das Fluid mehrere unterschiedliche Primer eingebracht werden, um unterschiedliche Teilstränge aus der DNA bzw. RNA herauszutrennen und gleichzeitig zu kopieren.

Vorteilhaft ist, wenn das Fluid auf eine vorgegebene Temperatur erwärmt und/oder abgekühlt wird, bevor der Messwert für die Diffusionsgeschwindigkeit des Markers erfasst wird, und wenn bei mindestens zwei unterschiedlichen Fluid-Temperaturen jeweils ein Messwert für die Diffusionsgeschwindigkeit erfasst wird. Dabei wird davon ausgegangen, dass die Diffusionsgeschwindigkeit des Markers bzw. Marker-Liganden-Komplexes mit ansteigender Temperatur zunimmt und der Ligand somit noch genauer in dem Fluid nachgewiesen und ggf in seiner Konzentration bestimmt werden kann, wenn die Diffusionsgeschwindigkeit bei unterschiedlichen Temperaturen gemessen wird.

Bei einer vorteilhaifien Ausgestaltung der Erfindung werden in das Fluid mindestens zwei Arten von Markern eingebracht, die für unterschiedliche Liganden bindungsspezifisch sind und sich hinsichtlich der Abklingzeit ihrer Lumineszenzstrahlung voneinander unterscheiden, wobei die Bestrahlung des Fluids mit der Anregungsstrahlung unterbrochen oder beendet und für die Abbildungen der einzelnen Marker auf dem Flächensensor jeweils mindestens ein Messwert für die Abklingzeit erfasst wird, wobei die Abbildungen durch Vergleich dieser Messwerte mit Referenzwerten jeweils einer Markerart zugeordnet werden, wobei die Diffusionsgeschwindigkeiten für die einzelnen Markerarten ermittelt werden, indem für jede Markerart jeweils die Bewegungsgeschwindigkeiten, mit denen die Abbilder der Marker der betreffenden Markerart auf dem Flächensensor ihre Lage verändern, gemessen werden, und wobei so erhaltenen Messwerte für die Diffusionsgeschwindigkeiten jeweils mit einem der betreffenden Markerart zugeordneten Referenzwertbereich verglichen und jeweils in Abhängigkeit von dem Ergebnis des Vergleichs auf die Anwesenheit der für die betreffende Markerart bindungsspezifischen Liganden in dem Fluid geschlossen wird. Die einzelnen Abbildungen der Marker auf dem Flächensensor können also auch anhand ihrer Abklingzeit einer Markerart zugeordnet werden.

Bei einer zweckmäßigen Ausführungsform der Erfindung weisen die einzelnen Marker eine unterschiedliche Masse auf Die Masse kann dabei so gewählt werden, dass die Diffusionsgeschwindigkeit der Marker bzw. der Marker-Liganden-Komplexe in einem für die Messwerterfassung günstigen Bereich liegt. Die Masse der Marker kann durch Anhängen von Molekülen verändert werden.

Die vorstehend genannte Aufgabe wird bezüglich der Vorrichtung dadurch gelöst, dass die Vorrichtung eine Messeinrichtung zur Messung der Diffusionsgeschwindigkeit hat, die der Marker und/oder ein Komplex, bestehend zumindest aus dem Liganden und dem daran gebundenen Marker, in dem Fluid aufweist, dass die Vorrichtung zum Bereitstellen eines Referenzwertbereichs für die Diffusionsgeschwindigkeit des Marker-Liganden-Komplexes einen Referenzwertgeber hat, und dass die Messeinrichtung und der Referenzwertgeber zum Vergleichen der gemessenen Diffusionsgeschwindigkeit mit dem Referenzwertbereich mit einer Vergleichseinrichtung verbunden sind.

In Abhängigkeit von dem Ergebnis des Vergleichs kann dann auf die Anwesenheit des Liganden in dem Fluid geschlossen: Wenn die gemessenen Diffusionsgeschwindigkeit mit dem Referenzwertbereich übereinstimmt, ist der Ligand in dem Fluid enthalten. Wenn die Diffusionsgeschwindigkeit außerhalb des Referenzwertbereichs liegt, ist der Ligand nicht in dem Fluid enthalten. Der Referenzwertgeber ist bevorzugt ein Datenspeicher.

Bei einer bevorzugten Ausführungsform der Erfindung weist die Vorrichtung einen Aufnahmebereich für das Fluid auf, wobei die Messeinrichtung mindestens einen für eine von dem Marker ausgesandte Lumineszenzstrahlung empfindlichen optischen Flächensensor hat, der derart relativ zu dem Aufnahmebereich angeordnet ist, dass von einem in dem Aufnahmebereich befindlichen Marker ausgesandte Lumineszenzstrahlung auf den Flächensensor abgebildet wird, und wobei der Flächensensor mit einer Auswerteeinrichtung verbunden ist, die derart ausgestaltet ist, dass sie aus dem zeitlichen Verlauf des Messsignals des Flächensensors die Diffusionsgeschwindigkeit ermittelt. Dabei kann der Marker durch eine Anregungsstrahlung und/oder eine chemische Reaktion zur Aussendung der Lumineszenzstrahlung angeregt werden. Zwischen dem Flächensensor und dem Aufnahmebereich kann eine Abbildungsoptik angeordnet sein. Die Diffusionsgeschwindigkeit kann in der Auswerteeinrichtung mit Hilfe von an sich bekannten Methoden der Bildverarbeitung ermittelt werden, indem die Bewegungsgeschwindigkeit, mit der sich das Abbild des Markers auf dem Flächensensor bewegt, bestimmt wird.

Die Vorrichtung weist vorzugsweise mindestens drei der optischen Flächensensoren auf, wobei diese Flächensensoren zur dreidimensionalen Messung der Diffusionsgeschwindigkeit mit ihren Erstreckungsebenen oder ihren optischen Achsen quer zueinander angeordnet sind. Die Diffusionsgeschwindigkeit kann dann vektoriell gemessen werden.

Zweckmäßigerweise ist der Aufnahmebereich für das Fluid von einer Messkammer umgrenzt, wobei der mindestens eine Flächensensor und/oder mindestens eine Lichtquelle zur Aussendung einer Anregungsstrahlung für den Marker in eine Wandung der Messkammer integriert ist (sind). Die Vorrichtung ermöglicht dadurch kompakte Abmessungen. Die Messkammer kann eine Durchflussmesskammer (Flusszelle) oder eine offene Messkammer, wie z.B. ein Trog sein.

Vorteilhaft ist, wenn die Messeinrichtung mindestens zwei Flächensensoren aufweist, die für unterschiedliche Spektralbereiche empfindlich sind und/oder denen optische Filter vorgeschaltet sind, die in unterschiedlichen Spektralbereichen für optische Strahlung durchlässig sind. Dadurch ist es möglich, die Diffusionsgeschwindigkeit von mehreren, mit in unterschiedlichen Spektralbereichen Lumineszenzstrahlung emittierenden Markern markierten Liganden gleichzeitig zu bestimmen.

Zweckmäßigerweise hat die Vorrichtung eine Temperiereinrichtung für den Aufnahmebereich. Diese kann in eine Wandung der Messkammer integriert sein.

Nachfolgend sind Ausführungsbeispiele der Erfindung anhand der Zeichnung näher erläutert. Es zeigt:
- Fig. 1: einen Querschnitt durch ein erstes Ausführungsbeispiel einer Durchflussmesskammer, und
- Fig. 2: einen Querschnitt durch ein zweites Ausführungsbeispiel einer Durchflussmesskammer.

Bei einem Verfahren zur qualitativen und quantitativen Detektion von in einem Fluid 1 enthaltenen Liganden 2a, 2b, 2c werden in das Fluid 1 optische Marker 3a, 3b, 3c unterschiedlicher Markerarten eingebracht. Die Marker 3a, 3b, 3c sind jeweils an einen Nachweisantikörper 4a, 4b, 4c gekoppelt, der für einen der betreffenden Markerart zugeordneten Liganden 2a, 2b, 2c bindungsspezifisch ist.

Wenn die Marker 3a, 3b, 3c mit einer optischen Anregungsstrahlung bestrahlt werden, senden sie jeweils eine Lumineszenzstrahlung aus. Die Markerarten sind derart gewählt, dass sich die Wellenlängen ihrer Lumineszenzstrahlungen voneinander unterscheiden. So können beispielsweise die Marker 3a einer ersten Markerart durch die Anregungsstrahlung zur Abgabe von grünem Licht, die Marker 3b einer zweiten Markerart zur Aussendung von blauem Licht und die Marker 3c einer dritten Markerart zur Emission von rotem Licht angeregt werden.

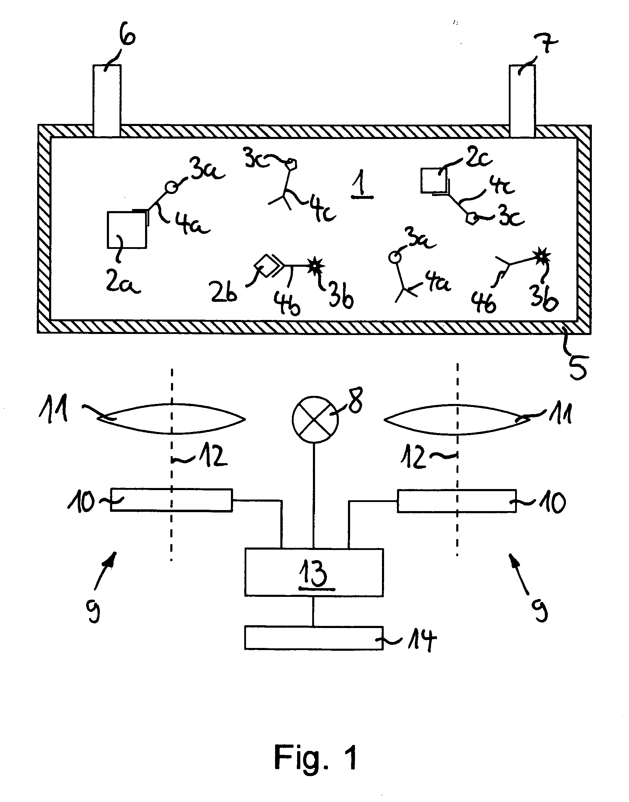

Nachdem die aus den Markern 3a, 3b, 3c und den Nachweisantikörpern 4a, 4b, 4c bestehenden Komplexe mit dem Fluid 1 vermischt wurden, wird das Gemisch in eine Messkammer 5 einer in Fig. 1 gezeigten, eine Messeinrichtung zur Messung der Diffusionsgeschwindigkeit der Marker 3a, 3b, 3c bzw. der Marker-Nachweisantikörper-Liganden-Komplexe aufweisenden Vorrichtung eingebracht. Die Messkammer ist als Durchflussmesskammer mit einer Innenhöhlung, einer Einlassöffnung 6 und einer Auslassöffnung 7 ausgestaltet. Die Messkammer ist auf eine vorbestimmte Temperatur temperiert.

Die Wandungen der Messkammer 5 sind für die Anregungsstrahlung und die Lumineszenzstrahlungen transparent. Zum Erzeugen der Anregungsstrahlung ist an der Messkammer 5 eine Lichtquelle 8 angeordnet, welche in Richtung der Messkammer 5 abstrahlt. Die Lichtquelle 8 kann z.B. eine Leuchtdiode sein.

Wie in Fig. 1 erkennbar ist, weist die Messeinrichtung zur Messung der Diffusionsgeschwindigkeit benachbart zu der Messkammer 5 zwei Kameras 9 auf, die jeweils einen für die Lumineszenzstrahlungen empfindlichen und für die Anregungsstrahlung unempfindlichen optischen Flächensensor 10, wie z.B. einen CCD-Sensor mit Pixeln für rotes, grünes und blaues Licht, und eine Abbildungsoptik 11 aufweisen. Die Abbildungsoptik 11 bildet jeweils die in der Innenhöhlung der Messkammer 5 befindlichen Marker 3a, 3b, 3c auf den der Abbildungsoptik 11 zugeordneten Flächensensor 10 ab. Die Kameras sind mit ihren optischen Achsen 12 parallel zueinander angeordnet und seitlich voneinander beabstandet.

Nachdem die Nachweisantikörper 4a, 4b, 4c mit dem Fluid in Kontakt gebracht wurden, wird eine vorbestimmte Zeitdauer abgewartet, um den Nachweisantikörpern 4a, 4b, 4c Gelegenheit zu geben, an die Liganden 2a, 2b, 2c zu binden. Dann wird das Fluid 1 mit den darin enthaltenen Markern 3a, 3b, 3c mit der Anregungsstrahlung bestrahlt, um die Marker 3a, 3b, 3c zur Abgabe der Lumineszenzstrahlung anzuregen. Dabei werden die Marker 3a, 3b, 3c als helle Bildpunkte auf die beiden Flächensensoren 10 abgebildet.

Die Flächensensoren 10 sind mit einer Steuer- und Auswerteeinrichtung 13 verbunden, die aus der Lage der Abbildungen der Marker 3a, 3b, 3c auf den Flächensensoren 10 und Kenngrößen für die Lage und Anordnung der Kameras 9 sowie deren Abbildungseigenschaften durch Triangulation die Lage der einzelnen Marker 3a, 3b, 3c im Raum ermittelt. Auf diese Weise werden mit Hilfe der Kameras 9 zyklisch Positionsmesswerte für die einzelnen Marker 3a, 3b, 3c erfasst. Anhand der zeitlichen Änderung der Positionsmesswerte werden Messwerte für die Diffusionsgeschwindigkeit der Marker 3a, 3b, 3c bestimmt. Da die Diffusionsgeschwindigkeit eines Teilchens in einem Fluid von der Masse des Teilchens abhängig ist, weisen Marker 3a, 3b, 3c, die nur an einen Nachweiseantikörper gebunden sind eine größere Diffusionsgeschwindigkeit auf als Marker, an die zusätzlich zu dem Nachweisantikörper auch ein Ligand 2a, 2b, 2c gebunden ist.

Die so ermittelten Diffusionsgeschwindigkeits-Messwerte werden mit Referenzwertbereichen verglichen, die in einem mit der Steuer- und Auswerteeinrichtung 13 3 verbunden Datenspeicher 14 abgelegt sind. Jeder Referenzwertbereich ist jeweils einem bestimmten Liganden-Antikörper-Marker-Komplex zugeordnet. Wenn die Diffusionsgeschwindigkeits-Messwerte mit dem betreffenden Referenzwertbereich übereinstimmen, wird festgestellt, dass in dem Fluid der dem Referenzwertbereich zugeordnete Marker 3a, 3b, 3c enthalten ist. Das Ergebnis des Vergleichs kann über eine in der Zeichnung nicht näher dargestellte, mit der Steuer- und Auswerteeinrichtung 13 verbundene Anzeigeeinrichtung ausgegeben werden.

Die Anzahl der Marker 3a, 3b, 3c, deren Diffusionsgeschwindigkeit mit dem Referenzwertbereich übereinstimmt, wird jeweils für jede Ligandenart ermittelt. Mit Hilfe der Anzahl, dem Volumen des Fluids 1 und vorgegebenen Kenngrößen wird für jede Ligandenart die Konzentration der Liganden 3a, 3b, 3c in dem Fluid 1 bestimmt.

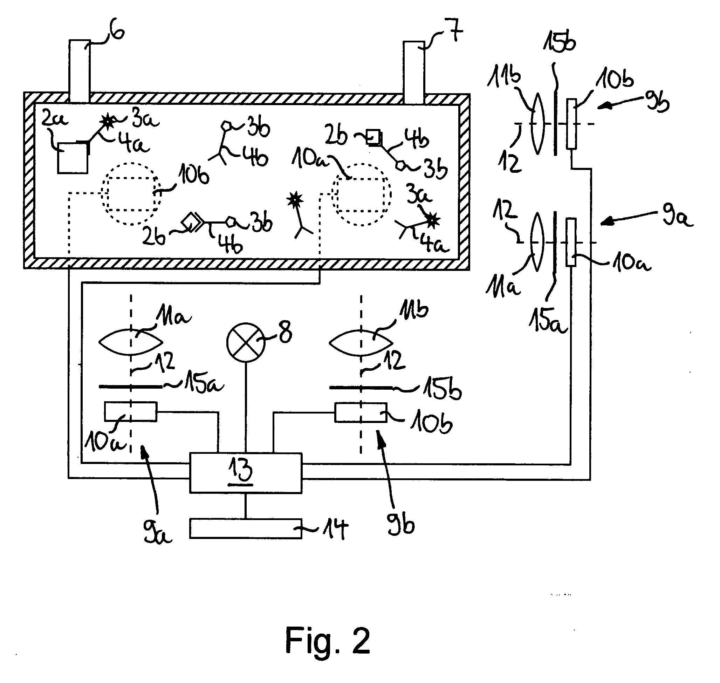

Bei dem in Fig. 2 gezeigten Ausführungsbeispiel hat die Messeinrichtung zur Messung der Diffusionsgeschwindigkeit für jede Markerart jeweils drei Flächensensoren 10a, 10b. Jedem Flächensensor 10a, 10b ist jeweils eine Abbildungsoptik 11a, 1 1 b und ein für die Lumineszenzstrahlung der betreffenden Markerart durchlässiges optisches Filter 15a, 15b zugeordnet. Die jeweils aus der Abbildungsoptik 11 a, 11 b, dem optischen Filter 15a, 15b und dem Flächensensor 10a, 10b gebildeten 3D-Kameras 9a, 9b sind mit ihren optischen Achsen 12 rechtwinklig zueinander angeordnet. Die Flächensensoren 10a, 10b sind mit einer gemeinsamen Auswerteeinrichtung 13 verbunden, die anhand der Abbildungen der Marker 3a, 3b auf den Flächensensoren 10a, 10b und Kenngrößen für die Lage und Anordnung der optischen Achsen 12 und die Abbildungseigenschaften der Abbildungsoptiken 11a, 11 b dreidimensionale Positionsmesswerte für die einzelnen Marker 3a, 3b ermittelt. Wie bei dem Ausführungsbeispiel nach Fig. 1 werden anhand der zeitlichen Änderung der Positionsmesswerte Messwerte für die Diffusionsgeschwindigkeit der Marker 3a, 3b, 3c bestimmt.

Die Auswerteeinrichtung 13 ist an einem Datenspeicher 14 angeschlossen, in dem für die unterschiedlichen Liganden-Antikörper-Marker-Komplexe jeweils ein Referenzwertbereich für die Diffusionsgeschwindigkeit abgelegt ist. Durch einen Vergleich der gemessenen Diffusionsgeschwindigkeiten mit den betreffenden Referenzwertbereichen wird ermittelt, ob die Liganden 2a, 2b in dem Fluid enthalten sind.

Erwähnt werden soll noch, dass die Liganden 2a, 2b, 2c der unterschiedlichen Ligandenarten sich hinsichtlich ihrer Masse und/oder ihrer Größe voneinander unterscheiden können. Das Verfahren kann aber auch zum Detektieren von Liganden unterschiedlicher Ligandenarten verwendet, wenn diese die gleiche Masse und/oder die gleiche Größe aufweisen.

## Patentansprüche

1. Verfahren zur Detektion mindestens eines Liganden (2a, 2b, 2c), von dem vermutet wird, dass er in einem zu untersuchenden Fluid (1) enthalten ist, wobei in das Fluid (1) wenigstens ein Marker (3a, 3b, 3c) eingebracht wird, der dazu geeignet ist, spezifisch an den Liganden (2a, 2b, 2c) zu binden, **dadurch gekennzeichnet, dass** mindestens ein Messwert für die Diffusionsgeschwindigkeit des Markers (3a, 3b, 3c) und/oder eines Komplexes, bestehend zumindest aus dem Liganden (2a, 2b, 2c) und dem daran gebundenen Marker (3a, 3b, 3c) in dem Fluid (1) erfasst wird, dass ein Referenzwertbereich für die Diffusionsgeschwindigkeit, die der Marker-Liganden-Komplex in dem Fluid (1) aufweist, bereitgestellt wird, und dass der Messwert mit dem Referenzwertbereich verglichen und in Abhängigkeit von dem Ergebnis dieses Vergleichs auf die Anwesenheit des Liganden (2a, 2b, 2c) in dem Fluid (1) geschlossen wird.

2. Verfahren nach Anspruch 1, **dadurch gekennzeichnet, dass** der Marker (3a, 3b, 3c) ein optischer Marker (3a, 3b, 3c) ist, dass das Fluid (1) mit einer Anregungsstrahlung bestrahlt wird, durch die der Marker (3a, 3b, 3c) zur Aussendung einer Lumineszenzstrahlung angeregt wird, dass der Marker (3a, 3b, 3c) auf mindestens einen für die Lumineszenzstrahlung empfindlichen optischen Flächensensor (10, 10a, 10b) abgebildet wird, und dass die Diffusionsgeschwindigkeit des Markers (3a, 3b, 3c) ermittelt wird, indem die Bewegungsgeschwindigkeit, mit der das Abbild des Markers (3a, 3b, 3c) auf dem Flächensensor (10, 10a, 10b) seine Lage verändert, gemessen wird.

3. Verfahren nach dem Oberbegriff von Anspruch 1, insbesondere nach Anspruch 1 oder 2, wobei der Marker (3a, 3b, 3c) ein optischer Marker (3a, 3b, 3c) ist, **dadurch gekennzeichnet, dass** die Marker (3a, 3b, 3c) derart gewählt wird, dass das Spektrum der von ihm ausgesandten Lumineszenzstrahlung von der Bindung des Markers (3a, 3b, 3c) an den Liganden (2a, 2b, 2c) abhängig ist, dass für mindestens eine Wellenlänge die von dem Marker (3a, 3b, 3c) ausgesandte Lumineszenzstrahlung gemessen und mit einem vorbestimmten Wertebereich verglichen wird, und dass in Abhängigkeit von dem Ergebnis dieses Vergleichs auf die keit von dem Ergebnis dieses Vergleichs auf die Anwesenheit des Liganden (2a, 2b, 2c) in dem Fluid (1) geschlossen wird.

4. Verfahren nach Anspruch 2 oder 3, **dadurch gekennzeichnet, dass** der optische Marker (3a, 3b, 3c) vorzugsweise mit Hilfe von Abbildungsoptiken (11, 11a, 11b) auf mindestens zwei und bevorzugt mindestens drei mit ihren Messebenen vorzugsweise quer zueinander verlaufenden, für die Lumineszenzstrahlung empfindlichen optischen Flächensensoren (10, 10a, 10b) abgebildet wird, dass die Bewegungsgeschwindigkeiten, mit denen die Abbildungen des Markers (3a, 3b, 3c) auf dem Flächensensor (10, 10a, 10b) ihre Lage verändern, ermittelt werden, und dass die Diffusionsgeschwindigkeit des Markers (3a, 3b, 3c) aus den Bewegungsgeschwindigkeiten und Kenngrößen für die relative Lage der Flächensensoren (10, 10a, 10b) und vorzugsweise der Abbildungsoptiken (11, 11a, 11b) bestimmt wird.

5. Verfahren nach einem der Ansprüche 2 bis 4, **dadurch gekennzeichnet, dass** in das Fluid (1) eine Vielzahl gleicher Marker (3a, 3b, 3c) eingebracht wird, dass die Anzahl der Marker (3a, 3b, 3c), deren Diffusionsgeschwindigkeit mit dem Referenzwertbereich übereinstimmt ermittelt wird, und dass aus der Anzahl die Konzentration des Markers (3a, 3b, 3c) in dem Fluid bestimmt wird.

6. Verfahren nach einem der Ansprüche 2 bis 5, **dadurch gekennzeichnet, dass** das Fluid (1) mit einem flächigen, mit seiner Abstrahlebene vorzugsweise parallel zu der Ebene des Flächensensors (10, 10a, 10b) angeordneten Strahlungsbündel der Anregungsstrahlung bestrahlt wird.

7. Verfahren nach einem der Ansprüche 2 bis 6, **dadurch gekennzeichnet, dass** das Strahlungsbündel zum Abbilden von in unterschiedlichen Breichen des Fluids (1 ) angeordneten Liganden (2a, 2b, 2c) auf den Flächensensor (10, 10a, 10b) quer zu dessen Erstreckungsebene relativ zu diesem verschoben und/oder verkippt wird.

8. Verfahren nach einem der Ansprüche 2 bis 7, **dadurch gekennzeichnet, dass** in das Fluid (1) mindestens zwei Arten von Markern (3a, 3b, 3c) eingebracht werden, die für unterschiedliche Liganden (2a, 2b, 2c) bindungsspezifisch sind und bei Bestrahlung mit der Anregungsstrahlung Lumineszenzstrahlung mit unterschiedlicher Wellenlänge aussenden, dass die Diffusionsgeschwindigkeiten jeweils für die einzelnen Markerarten ermittelt werden, indem für jede der Wellenlängen jeweils die Bewegungsgeschwindigkeiten, mit denen die Abbilder der Marker (3a, 3b, 3c) der betreffenden Markerart auf dem Flächensensor (10, 10a, 10b) ihre Lage verändern, gemessen werden, und dass die so erhaltenen Messwerte für die Diffusionsgeschwindigkeiten jeweils mit einem der betreffenden Markerart zugeordneten Referenzwertbereich verglichen und jeweils in Abhängigkeit von dem Ergebnis des Vergleichs auf die Anwesenheit der für die betreffende Markerart bindungsspezifischen Liganden (2a, 2b, 2c) in dem Fluid (1) geschlossen wird.

9. Verfahren nach Anspruch 1 bis 8, **dadurch gekennzeichnet, dass** der mindestens eine Ligand (2a, 2b, 2c) **dadurch** bereitgestellt wird, dass aus einem in dem Fluid enthaltenen DNA- und/oder RNA-Molekül mindestens ein Teilstrang herausgetrennt und mittels einer Polymerase-Kettenreaktion vervielfältigt wird

10. Verfahren nach Anspruch 1 bis 9, **dadurch gekennzeichnet, dass** das Fluid (1) auf eine vorgegebene Temperatur erwärmt und/oder abgekühlt wird, bevor der Messwert für die Diffusionsgeschwindigkeit des Markers (3a, 3b, 3c) erfasst wird, und dass vorzugsweise bei mindestens zwei unterschiedlichen Fluid-Temperaturen jeweils ein Messwert für die Diffusionsgeschwindigkeit erfasst wird.

11. Verfahren nach Anspruch 1 bis 10, **dadurch gekennzeichnet, dass** in das Fluid mindestens zwei Arten von Markern (3a, 3b, 3c) eingebracht werden, die für unterschiedliche Liganden (2a, 2b, 2c) bindungsspezifisch sind und sich hinsichtlich der Abklingzeit ihrer Lumineszenzstrahlung voneinander unterscheiden, dass die Bestrahlung des Fluids (1) mit der Anregungsstrahlung unterbrochen oder beendet und für die Abbildungen der einzelnen Marker (3a, 3b, 3c) auf dem Flächensensor (10, 10a, 10b) jeweils mindestens ein Messwert für die Abklingzeit erfasst wird, dass die Abbildungen durch Vergleich dieser Messwerte mit Referenzwerten jeweils einer Markerart zugeordnet werden, dass die Diffusionsgeschwindigkeiten für die einzelnen Markerarten ermittelt werden, indem für jede Markerart jeweils die Bewegungsgeschwindigkeiten, mit denen die Abbilder der Marker (3a, 3b, 3c) der betreffenden Markerart auf dem Flächensensor (10, 10a, 10b) ihre Lage verändern, gemessen werden, und dass so erhaltenen Messwerte für die Diffusionsgeschwindigkeiten jeweils mit einem der betreffenden Markerart zugeordneten Referenzwertbereich verglichen und jeweils in Abhängigkeit von dem Ergebnis des Vergleichs auf die Anwesenheit der für die betreffende Markerart bindungsspezifischen Liganden (2a, 2b, 2c) in dem Fluid (1) geschlossen wird.

12. Verfahren nach Anspruch 1 bis 11, **dadurch gekennzeichnet, dass** die einzelnen Marker (3a, 3b, 3c) eine unterschiedliche Masse aufweisen.

13. Vorrichtung zur Detektion mindestens eines mit einem Marker (3a, 3b, 3c) spezifisch markierbaren Liganden (2a, 2b, 2c), von dem vermutet wird, dass er in einem zu untersuchenden Fluid (1) enthalten ist, **dadurch gekennzeichnet, dass** die Vorrichtung eine Messeinrichtung zur Messung der Diffusionsgeschwindigkeit hat, die der Marker (3a, 3b, 3c) und/oder ein Komplex bestehend zumindest aus dem Liganden (2a, 2b, 2c) und dem daran gebundenen Marker (3a, 3b, 3c), in dem Fluid (1) aufweist, dass die Vorrichtung zum Bereitstellen eines Referenzwertbereichs für die Diffusionsgeschwindigkeit des Marker-Liganden-Komplexes einen Referenzwertgeber hat, und dass die Messeinrichtung und der Referenzwertgeber zum Vergleichen der gemessenen Diffusionsgeschwindigkeit mit dem Referenzwertbereich mit einer Vergleichseinrichtung verbunden sind.

14. Vorrichtung nach Anspruch 13, **dadurch gekennzeichnet, dass** sie einen Aufnahmebereich für das Fluid (1) aufweist, dass die Messeinrichtung mindestens einen für eine von dem Marker ausgesandte Lumineszenzstrahlung empfindlichen optischen Flächensensor (10, 10a, 10b) hat, der derart relativ zu dem Aufnahmebereich angeordnet ist, dass von mindestens einem in dem Aufnahmebereich befindlichen Marker (3a, 3b, 3c) ausgesandte Lumineszenzstrahlung auf den Flächensensor (10, 10a, 10b) abgebildet wird, und dass der Flächensensor (10, 10a, 10b) mit einer Auswerteeinrichtung (13) verbunden ist, die derart ausgestaltet ist, dass sie aus dem zeitlichen Verlauf des Messsignals des Flächensensors (10, 10a, 10b) die Diffusionsgeschwindigkeit ermittelt.

15. Vorrichtung nach Anspruch 13 oder 14, **dadurch gekennzeichnet, dass** sie mindestens drei der optischen Flächensensoren (10, 10a, 10b) aufweist, und dass diese Flächensensoren (10, 10a, 10b) zur dreidimensionalen Messung der Diffusionsgeschwindigkeit mit ihren Erstreckungsebenen quer zueinander angeordnet sind.

16. Vorrichtung nach einem der Ansprüche 13 bis 15, **dadurch gekennzeichnet, dass** der Aufnahmebereich für das Fluid (1) von einer Messkammer umgrenzt ist, und dass der mindestens eine Flächensensor (10, 10a, 10b) und/oder mindestens eine Lichtquelle (8) zur Aussendung einer Anregungsstrahlung für den Marker (3a, 3b, 3c) in eine Wandung der Messkammer integriert ist (sind).

17. Vorrichtung nach einem der Ansprüche 13 bis 16, **dadurch gekennzeichnet, dass** die Messeinrichtung mindestens zwei Flächensensoren (10, 10a, 10b) aufweist die für unterschiedliche Spektralbereiche empfindlich sind und/oder denen optische Filter (15a, 15b) vorgeschaltet sind, die in unterschiedlichen Spektralbereichen für optische Strahlung durchlässig sind.

18. Vorrichtung nach einem der Ansprüche 13 bis 17, **dadurch gekennzeichnet, dass** sie eine Temperiereinrichtung für den Aufnahmebereich aufweist.
